# EUROPÄISCHE PATENTSCHRIFT

(11) **EP 2 553 398 B1**
(45) Veröffentlichungstag und Bekanntmachung des Hinweises auf die Patenterteilung: **19.08.2015**
(21) Anmeldenummer: 11712746.4
(22) Anmeldetag: 28.03.2011
(51) Int. Cl.: G01D 5/14, G01B 7/14

(54) **VORRICHTUNG ZUR ERFASSUNG DER POSITION EINER STELLEINHEIT**
DEVICE FOR DETECTING THE POSITION OF AN ACTUATOR
DISPOSITIF DE DÉTECTION DE LA POSITION D'UNE UNITÉ DE RÉGLAGE

(30) Priorität: 29.03.2010 AT 5042010
(43) Veröffentlichungstag der Anmeldung: 06.02.2013
(73) Patentinhaber: AIT Austrian Institute of Technology GmbH, 1220 Wien (AT); Seibersdorf Labor GmbH, 2444 Seibersdorf (AT)
(72) Erfinder: BAMMER, Manfred, A-1220 Wien (AT); SCHMID, Gernot, A-2833 Bromberg (AT)
(74) Vertreter: Wildhack & Jellinek
(86) Internationale Anmeldenummer: PCT/AT2011/000154
(87) Internationale Veröffentlichungsnummer: WO 2011/120064

(56) Entgegenhaltungen:
- EP-A1- 2 072 961
- WO-A1-2006/082047
- DE-A1- 3 821 764
- GB-A- 2 454 045
- US-A- 6 018 241
- US-A1- 2007 001 666
- US-B1- 6 332 278

## Beschreibung

Die Erfindung betrifft eine Vorrichtung zur Erfassung der Position einer Stelleinheit gemäß dem Oberbegriff des Anspruchs 1 sowie ein Verfahren zur Erfassung der Position einer Stelleinheit gemäß dem Oberbegriff des Patentanspruchs 12. Ferner betrifft die Erfindung eine Stelleinheit nach Anspruch 10.

Typischerweise werden derartige Verfahren und Vorrichtungen beim Ausfüllen elektronischer Fragebögen verwendet. Dabei besteht ein weites Anwendungsfeld, da abhängig von den Fragestellungen ein Einsatz in unterschiedlichsten Gebieten möglich ist. So kann beispielsweise im medizinischen Bereich eine umfangreiche Erhebung des subjektiven persönlichen Befindens von Patienten erhoben werden. Außerdem können unterschiedliche Fragebögen, bei denen eine quasi-kontinuierliche Fragestellung mit einer Vielzahl von Abstufungen zwischen zwei Extremwerten vorliegt, an Personen verteilt, beispielsweise bei der Erhebung von Zustimmung bzw. Ablehnung von bzw. zu öffentlichen Projekten oder politischen Parteien usw. und von diesen Personen beantwortet werden. Die Erfassung der Daten kann automatisch erfolgen.

Generell gibt es für die Erfindung auch eine Vielzahl unterschiedlicher Anwendungen im Bereich der Erfassung von Relativpositionen, beispielsweise in der Industrieautomation.

Herkömmliche Positionsbestimmungseinheiten weisen hierbei erhebliche Komplikationen auf, da die Stelleinheit, also diejenige Einheit, deren Position bestimmt werden soll, üblicherweise nur eine eingeschränkte Beweglichkeit gegenüber bzw. auf der Fläche aufweist.

Der Erfindung liegt die Aufgabe zugrunde, eine möglichst rasche und unkomplizierte Erfassung der Position einer Stelleinheit zu ermöglichen.

Diese Aufgabe wird bei einer Vorrichtung der eingangs genannten Art erfindungsgemäß durch die Merkmale des Kennzeichens des Patentanspruchs 1 gelöst.

Es ist eine Vorrichtung zur Erfassung der Position einer Stelleinheit vorgesehen, umfassend eine Leiteranordnung, die sie durchsetzende magnetische Flüsse erfasst und in ein Spannungssignal umwandelt, das abhängig von der Position ist, an dem der magnetische Fluss die Leiteranordnung durchdringt, *wobei dieses induzierte Spannungssignal proportional zur Position des magnetischen Flusses, gemessen entlang einer vorgegebenen Achse ausgehend von einem vorgegebenen Ausgangspunkt, ist. Erfingdungsgemäß ist vorgesehen,* dass eine an die Leiteranordnung angeschlossene Positionsbestimmungseinheit vorgesehen ist, die die Position eines von der Stelleinheit erzeugten, die Leiteranordnung durchsetzenden magnetischen Flusses ermittelt und der Positionsbestimmungseinheit eine Übertragungseinheit nachgeordnet ist, mittels der die ermittelte Position an einen Empfänger übertragbar ist.

Eine solche Vorrichtung bietet den Vorteil, dass die Position der Stelleinheit frei wählbar bzw. festlegbar ist und somit eine verbesserte Handhabung bei einem elektronischen Fragebogensystem ermöglicht wird. Insbesondere ergibt sich in vorteilhafter Weise, dass dieselbe Stelleinheit für eine Vielzahl unterschiedlicher zu beantwortender Fragen verwendet werden kann.

Ein weiterer Aspekt der Erfindung sieht vor, dass eine Referenzleiteranordnung vorgesehen ist, die derart angeordnet ist, dass die Referenzleiteranordnung im wesentlichen denselben magnetischen Fluss erfasst wie die Leiteranordnung, wobei am Ausgang der Referenzleiteranordnung ein Spannungssignal anliegt, das unabhängig von der Position der Stelleinheit ist, und dass die Positionsbestimmungseinheit das Verhältnis, insbesondere den Quotienten, des an der Leiteranordnung anliegenden Spannungssignals und des an der Referenzleiteranordnung anliegenden Spannungssignals ermittelt, abgibt und der Übertragungseinheit zuführt.

Dies verbessert die Detektionsgenauigkeit und kompensiert die Abhängigkeit des Werts für die ermittelte Position von der Stärke bzw. der Frequenz des magnetischen Flusses.

Ferner kann vorgesehen werden, dass die Leiteranordnung einen einzigen, insbesondere gewickelten oder mäanderförmigen, Leiter, insbesondere einen Draht, umfasst, wobei vom Leiter der Leiteranordnung umschlungene Flächenbereiche, die näher dem Ausgangspunkt liegen, öfter vom Draht umschlungen sind als Flächenbereiche, die vom Ausgangspunkt weiter entfernt sind.

Diese besondere Ausgestaltung der Erfindung ermöglicht einen besonders einfachen Aufbau der Leiteranordnung sowie eine präzise Bestimmung der Position der Stelleinheit.

Es kann weiters vorgesehen sein, dass der Leiter der Leiteranordnung vorzugsweise in einer Ebene verläuft und/oder Parallel zur Achse verläuft.

Beide Merkmale ermöglichen, separat oder in Kombination, eine effiziente und einfache Erfassung der Position der Stelleinheit.

Weiters kann vorgesehen sein, dass die Referenzleiteranordnung mit einem parallel zum Leiter der Leiteranordnung verlaufenden Leiter gebildet ist, wobei insbesondere der vom Draht der Referenzleiteranordnung umschlungene Flächenbereich mit dem vom Draht der Leiteranordnung umschlungenen Flächenbereich deckungsgleich ist.

Dieser Aufbau ermöglicht eine besonders wirksame Kompensation des Einflusses unterschiedlich starker magnetischer Flüsse unterschiedlicher Stelleinheiten. Weiters wird auch die Schwächung des Flusses durch die Entladung einer in der Stelleinheit befindlichen Batterie weitestgehend kompensiert.

Ein besonderer Aspekt der Erfindung sieht vor, dass die Leiteranordnung, gegebenenfalls auch die Referenzleiteranordnung, in einem flachen Trägerkörper, insbesondere aus Papier oder Karton, angeordnet ist bzw. sind, wobei mögliche Positionen der Stelleinheit, beispielsweise in Form einer Skala, auf dem Trägerkörper dargestellt, insbesondere mit einem Aufdruck versehen, sind

Dies ermöglicht den Aufbau eines Fragebogens, der einfach benutzbar ist. Zudem ist hierdurch eine besonders vorteilhafte Anordnung der Leiteranordnung bzw. der Referenzleiteranordnung beschrieben.

Eine besondere Ausführungsform der erfindungsgemäßen Vorrichtung verfügt über eine Stelleinheit, mit der bei Annäherung oder Anlage an die Leiteranordnung, vorzugsweise auch bei Annäherung oder Anlage an die Referenzleiteranordnung, ein magnetischer Fluss, insbesondere ein magnetischer Wechselfluss, durch die Leiteranordnung, vorzugsweise auch durch die Referenzleiteranordnung, aufprägbar ist.

Dies ermöglicht ein besonders rasches und wirksames Einstellen der zu erfassenden Größen.

Weiters kann vorgesehen sein, dass die Stelleinheit über eine Empfangseinheit verfügt, die mit der Übertragungseinheit in Datenverbindung, insbesondere in Funkverbindung, steht, wobei die Stelleinheit über eine Anzeigeeinheit verfügt, die die von der Übertragungseinheit übermittelte Position anzeigt.

Dies ermöglicht eine Interaktion mit der Person, die die zu erfassende Größe einstellt und ermöglicht eine einfache Überwachung der eingestellten Werte durch die Person selbst.

Ferner kann vorgesehen sein, dass die Stelleinheit durch ein Mobilfunkgerät gebildet ist.

Dies ermöglicht vielfältige Anwendungen und erleichtert die Programmierbarkeit der Stelleinheit für die Beantwortung bestimmter Fragebögen. Durch dieses Vorgehen kann auf einfache Weise die auf handelsüblichen Mobilfunktelefonen verfügbare Funktionalität genutzt und für die Zwecke der Datenerfassung eingesetzt werden.

Zudem kann vorgesehen sein, dass die Stelleinheit als separater, eigenständiger, frei beweglicher Bauteil ausgebildet ist.

Dies ermöglicht die Verwendung einer Stelleinheit für eine Vielzahl von Fragebögen.

Weiters liegt der Erfindung die Aufgabe zugrunde, eine Stelleinheit zu entwickeln, die für unterschiedliche Fragen eines Fragebogens bzw. für mehrere Fragebögen eingesetzt werden kann.

Dies wird erfindungsgemäß durch eine Stelleinheit gemäß Anspruch 10 erreicht. Eine solche Stelleinheit kann für eine Vielzahl unterschiedlicher Fragebögen eingesetzt werden.

Dabei ist eine Stelleinheit, insbesondere gebildet durch ein Mobilfunkgerät, vorgesehen, umfassend eine Spule zur Erzeugung eines magnetischen Flusses zur Positionsbestimmung bei Anlage an eine erfindungsgemäße Vorrichtung und eine Empfangseinheit zum Aufbau einer Datenverbindung mit einer erfindungsgemäßen Vorrichtung.

Die Stelleinheit verfügt vorteilhafterweise über eine Anzeigeeinheit, auf der von der Empfangseinheit empfangene Daten anzeigbar sind.

Dies ermöglicht eine Interaktion mit der Person, die die zu erfassende Größe einstellt und ermöglicht eine einfache Überwachung der eingestellten Werte durch die Person selbst.

Weiters besteht die Aufgabe, ein Verfahren zu schaffen, das eine möglichst rasche und unkomplizierte Erfassung der Position einer Stelleinheit ermöglicht.

Ein erfindungsgemäßes Verfahren ist gekennzeichnet durch die Merkmale des Anspruches 12.

Die Erfindung sieht ein Verfahren zur Erfassung der Position einer Stelleinheit gegenüber einer Leiteranordnung vor, wobei die Leiteranordnung sie durchsetzende magnetische Flüsse erfasst und in ein Spannungssignal umwandelt, das abhängig von der Position ist, an dem der magnetische Fluss die Leiteranordnung durchdringt, und die Stelleinheit und die Leiteranordnung relativ und frei gegeneinander beweglich sind. Erfindungsgemäß ist vorgesehen, dass die Stelleinheit auf einer Position auf einer vorgegebenen Verschiebeachse positioniert wird und währenddessen oder anschließend von der Stelleinheit ein magnetischer Fluss erzeugt wird, der die Leiteranordnung durchsetzt, der aufgeprägte Fluss von der Leiteranordnung in ein Spannungssignal umgewandelt wird, das am Ausgang der Leiteranordnung anliegt, und dieses Spannungssignal am Ausgang der Leiteranordnung gemessen wird und das Spannungssignal als der Position entsprechender Wert ausgewertet oder zur Übertragung auf Abfrage zur Verfügung gehalten wird.

Ein solches Verfahren bietet den Vorteil, dass die Position der Stelleinheit frei festlegbar ist und somit eine verbesserte Handhabung bei einem elektronischen Fragebogensystem ermöglicht wird.

Es kann vorteilhafterweise vorgesehen sein, dass das am Ausgang einer Referenzleiteranordnung, die im wesentlichen denselben magnetischen Fluss erfasst wie die Leiteranordnung, anliegende induzierte Spannungssignal ermittelt wird und dass das Verhältnis, insbesondere der Quotient, des an der Leiteranordnung anliegenden Spannungssignals und des an der Referenzleiteranordnung anliegenden Spannungssignals ermittelt bzw. zur Auswertung und/oder Übertragung zur Verfügung gehalten wird.

Dies verbessert die Detektionsgenauigkeit und kompensiert die Abhängigkeit von der Stärke bzw. der Frequenz des magnetischen Flusses.

Weiters kann vorgesehen sein, dass die ermittelte Position an die Stelleinheit übertragen und auf der Stelleinheit angezeigt wird.

Dies ermöglicht eine Interaktion mit der Person, die die zu erfassende Größe einstellt und ermöglicht eine einfache Überwachung der eingestellten Werte durch die Person selbst.

Zudem kann vorgesehen sein, dass gemeinsam mit der Position der Stelleinheit gegenüber der Leiteranordnung ein Code übermittelt wird, der der Leiteranordnung eindeutig zugeordnet ist und diese eindeutig bezeichnet.

Dies erlaubt die Erfassung mehrerer Größen mit derselben Stelleinheit bei einer Vielzahl von Leiteranordnungen.

Weiters kann vorgesehen sein, dass die als Mobilfunkgerät ausgebildete Stelleinheit mit einer Datenerfassungseinheit, insbesondere über ein Mobilfunknetz, in Funkverbindung steht und an diese die Anschlussnummer, den Code sowie die Position übermittelt.

Dies erlaubt die zentrale automatisierte Erfassung einer Vielzahl von Daten von unterschiedlichen Personen mittels eines einheitlichen Fragebogensystems.

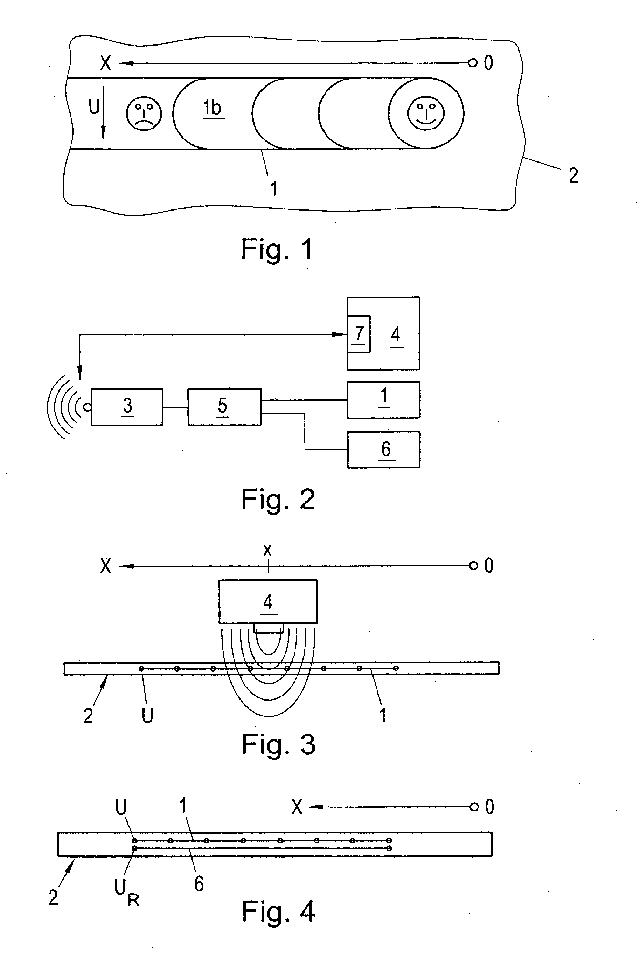

Die Erfindung wird ohne Beschränkung der Allgemeinheit des Erfindungsgedankens anhand eines Ausführungsbeispiels in den Fig. 1 bis 7 näher dargestellt.

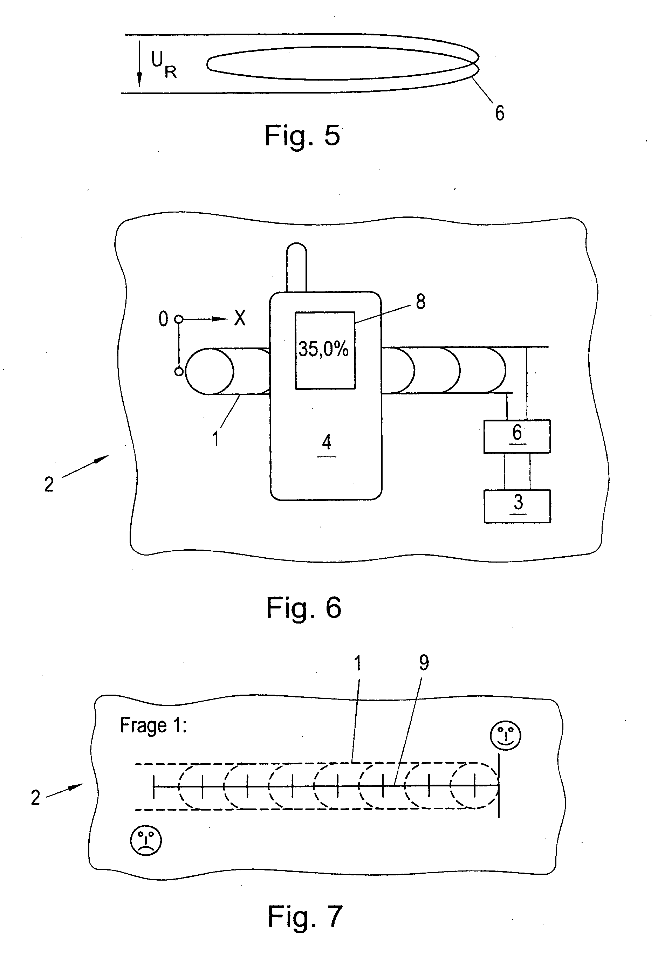

Fig. 1 zeigt einen Ausschnitt eines Fragebogens mit einer Leiteranordnung. Fig. 2 zeigt schematisch die Verarbeitung der mit den Leiteranordnungen aufgenommenen induzierten Spannungen. Fig. 3 zeigt einen Schnitt durch einen Trägerkörper sowie die Stelleinheit. Fig. 4 zeigt den in Fig. 3 dargestellten Schnitt mit einer Referenzleiteranordnung. Fig. 5 zeigt schematisch die Referenzleiteranordnung. Fig. 6 zeigt den in Fig. 1 dargestellten Ausschnitt mit einer Stelleinheit. Fig. 7 zeigt den Aufdruck auf einem Trägerkörper sowie die Anordnung der Leiteranordnung.

Fig. 1 zeigt den Ausschnitt der Oberfläche eines Trägerkörpers 2, in bzw. auf dem eine Leiteranordnung 1 angeordnet ist. Die Leiteranordnung 1 kann auch in einem flachen Trägerkörper 2 eingebettet sein. Der Trägerkörper 2 besteht vorteilhafterweise aus Papier oder Karton, auf den einzelne Positionen x, beispielsweise in Form einer Skala 9 wie in Fig. 7 dargestellt, aufgedruckt bzw. dargestellt sind. Auf einem Trägerkörper 2 können auch mehrere Leiteranordnungen 1 aufgedruckt sein bzw. es können in dem Trägerkörper 2 mehrere Leiteranordnungen 1 eingebettet sein. Für spezielle Anwendungszwecke kann auf dem Trägerkörper 2 eine Frage aufgedruckt sein, etwa nach dem persönlichen Wohlbefinden. Auf dem Trägerkörper 2 ist eine Skala 9 aufgedruckt, und eine Stelleinheit 4 kann auf der Skala 9 entsprechend dem Wohlbefinden der Person positioniert werden. Beispielsweise wird an einem Ende der Skala 9 ein Symbol für gutes Wohlbefinden, beispielsweise ein lachendes Gesicht, und am anderen Ende der Skala 9 ein Symbol für schlechtes Wohlbefinden, beispielsweise ein weinendes Gesicht, aufgedruckt (Fig. 1, Fig. 7). Die Person kann nun zwischen diesen beiden Extremen den Wert ihres eigenen Wohlbefindens frei einstellen, indem sie die Stelleinheit 4 auf eine von ihr gewählte Position zwischen diesen beiden Symbole positioniert.

Unterhalb der Skala 9 auf bzw. in dem Trägerkörper 2 ist eine Leiteranordnung 1 angeordnet, die den Trägerkörper 2 durchdringende magnetische Flüsse Φ erfasst und in ein von der Position x, an der der magnetische Fluss Φ die Leiteranordnung 1 durchdringt, abhängiges Spannungssignal U umwandelt. Durch den magnetischen Fluss Φ wird in der Leiteranordnung 1 ein Spannungssignal U induziert. Dieses Spannungssignal U ist proportional zur Position x des magnetischen Flusses Φ, gemessen entlang einer vorgegebenen Achse X ausgehend von einem vorgegebenen Ausgangspunkt O. Die Achse X stimmt dabei im Wesentlichen mit der auf dem Trägerkörper 2 aufgedruckten Skala 9 überein; der vorgegebene Ausgangspunkt O entspricht weitestgehend einem der beiden Extremwerte, die auf der Skala aufgedruckt sind, beispielsweise der Position des Symbols "weinendes Gesicht". Der jeweils andere Extremwert wird so gewählt, dass er sich am anderen Ende der Achse X der Leiteranordnung 1 befindet. Die Leiteranordnung 1 umfasst, wie in Fig. 1 dargestellt, einen einzigen gewickelten Leiter, im vorliegenden Fall einen Draht, wobei Flächenbereiche, die näher am Ausgangspunkt O liegen, öfter vom Draht umschlungen sind als Flächenbereiche der Leiteranordnung 1, die vom Ausgangspunkt weiter entfernt sind. Alternativ kann auch ein mäanderförmiger Leiter herangezogen werden. Der Draht ist vorzugsweise auf dem Trägerkörper 2 angeordnet oder aufgedruckt oder in diesen eingebettet. Der Draht verläuft dabei vorteilhafterweise weitestgehend parallel zur Achse X, lediglich im Bereich der Windungen verläuft der Draht entweder, wie in den Figuren dargestellt, kurvenförmig oder auch rechteckig. Die Leiteranordnung 1 weist insbesondere die Form einer Spule mit mehreren Wicklungen mit unterschiedlicher umschlungener Fläche auf.

Fig. 4 zeigt den Trägerkörper 2 im Querschnitt, wobei die Leiteranordnung 1 in den Trägerkörper 2 eingebettet ist. Ferner ist in dem Trägerkörper 2 unmittelbar oberhalb bzw. unterhalb der Leiteranordnung 1 eine Referenzleiteranordnung 6 angeordnet. Die Referenzleiteranordnung 6 ist mit einem Leiter gebildet, wobei der vom Draht der Referenzleiteranordnung 6 umschlungene Flächenbereich dem vom Draht der Leiteranordnung 1 umschlungenen Flächenbereich, zumindest weitestgehend, entspricht. Es ist vorteilhaft, wenn die beiden umschlungenen Teile der Leiteranordnung 1 und der Referenzleiteranordnung 6 entweder deckungsgleich sind oder einander weitestgehend überdecken. Es ist besonders vorteilhaft, wenn der gesamte von der Stelleinheit 4 ausgehende Fluss oder ein Großteil dieses Flusses sowohl die Leiteranordnung 1 als auch die Referenzleiteranordnung 6 durchsetzt. Besonders vorteilhafterweise liegen beide Leiteranordnungen 1, 6 auf oder parallel zu einer Ebene und weisen gegebenenfalls nur einen sehr geringen Abstand von wenigen 10 bis 100 µm voneinander auf. Zudem kann vorgesehen sein, dass die beiden Leiteranordnungen 1, 6 zueinander deckungsgleich sind oder einander zumindest in großen Teilen der vom Leiter umschlungenen Fläche überlappen. Die Referenzleiteranorndung muss nicht zwingend unmittelbar unterhalb oder oberhalb der Leiteranorndung 1 liegen; genau so können die Leiteranordnungen 1, 6 in der selben Ebene liegen.

Die Referenzleiteranordnung 6 ist so angeordnet und ausgebildet, dass der Fluss Φ, der durch die von ihr umschlungene Fläche tritt, unabhängig von der Position des Durchtritts erfasst wird, wobei am Ausgang der Leiteranordnung 1 ein induziertes Spannungssignal U anliegt. Die Referenzleiteranordnung 6 ist insbesondere als Spule mit mehreren Wicklungen ausgebildet, die jeweils dieselbe Fläche umschlingen.

Wie in Fig. 2 dargestellt, werden die an der Leiteranordnung 1 bzw. an der Referenzleiteranordnung 6 anliegenden Spannungssignale U, U_{R} einer Positionsbestimmungseinheit 5 zugeführt. Diese Positionsbestimmungseinheit 5 bestimmt das Verhältnis, insbesondere den Quotienten, des am Ausgang der Leiteranordnung 1 anliegenden Spannungssignals U und des an der Referenzleiteranordnung 6 anliegenden Spannungssignals U_{R} und ermittelt diesen Quotienten und stellt diesen an ihrem Ausgang zur Verfügung.

Die Verwendung einer Referenzleiteranordnung 6 ist jedoch nicht zwingend erforderlich. Es kann vorgesehen sein, dass lediglich die Leiteranordnung 1 in dem flachen Trägerkörper 2 eingebettet oder an der Oberfläche des Trägerkörpers 1 angeordnet oder befestigt ist und die Positionsbestimmungseinheit 5 lediglich das am Ausgang der Leiteranordnung 1 anliegende Spannungssignal misst und ein entsprechendes Signal an ihrem Ausgang abgibt.

Legt man nun eine Stelleinheit 4, die einen magnetischen Fluss Φ erzeugt, auf die den Trägerkörper 2, so durchdringt dieser von der Stelleinheit 4 abgegebene magnetische Fluss Φ die Leiteranordnung 1, sodass am Ausgang der Leiteranordnung 1 ein Spannungssignal U anliegt. Vorteilhafterweise handelt es sich bei dem magnetischen Fluss Φ um einen magnetischen Wechselfluss, etwa mit einer Frequenz von einigen kHz.

Die Stelleinheit 4 ist als Einzelkomponente ausgebildet, die mechanisch in der Regel nicht mit dem Trägerkörper 2 verbunden ist. Sie ist vielmehr gegenüber der Leiteranordnung 1 frei beweglich. Die Stelleinheit 4 wird auf eine Position x auf der Skala 9 bzw. auf der vorgegebenen Achse X positioniert.

Währenddessen oder anschließend wird von der Stelleinheit 4 ein die Leiteranordnung 1 durchsetzender magnetischer Fluss Φ erzeugt. Das dabei ermittelte Spannungssignal U ist aufgrund des Aufbaus der Leiteranordnung 1 abhängig von der Position, an der der Fluss Φ abgegeben wird, somit von der Position der Stelleinheit 4. Befindet sich die Stelleinheit 4 an einer Position x, die auf der Achse X liegt, so durchdringt der von der Stelleinheit 4 abgegebene Fluss Φ die Leiteranordnung 1 an dieser Position x.
Tritt der magnetische Fluss Φ durch Flächenbereich, der vom Draht der Leiteranordnung einfach umschlungen ist, wird abhängig von dem magnetischen Fluss Φ ein Spannungssignal U induziert, die am Ausgang der Leiteranordnung 1 anliegt. In Flächenbereichen, die zweifach vom Draht der Leiteranordnung 1 umschlungen sind 1 b, wird bei demselben magnetischen Fluss Φ ein Spannungssignal U mit der doppelten Spannung induziert. Entsprechend wird bei Flächenbereichen, die vom Draht der Leiteranordnung 1 n-fach umschlungen sind, ein Spannungssignal U mit dem jeweils n-fachen Spannungswert induziert. Da Flächenbereiche, die näher am Ausgangspunkt O liegen, öfter vom Draht umschlungen sind als Flächenbereiche, die vom Ausgangspunkt O weiter entfernt sind, wird abhängig von der Position x, an dem der magnetische Fluss Φ die Fläche der Leiteranordnung 1 durchdringt, ein jeweils unterschiedliches Spannungssignal U erhalten, das proportional zur Position x ist. Da der magnetische Fluss Φ von der Stelleinheit 4 abgegeben wird, ist das Spannungssignal U am Ausgang der Leiteranordnung 1 proportional zur Position x der Stelleinheit 4.

Während die Leiteranordnung 1 ein von der Position x des magnetisches Flusses Φ und somit auch ein von der Position x der Stelleinheit 4 abhängiges Signal abgibt, ist das von der Referenzleiteranordnung 6 abgegebene Spannungssignal U_{R} unabhängig von der Position x der Stelleinheit 4 und hängt lediglich von der Stärke bzw. der Frequenz des von der Stelleinheit 4 abgegebenen magneitschen Flusses Φ ab.

Auf Grund der Verwendung unterschiedlicher oder unterschiedliche konfigurierter Stelleinheiten 4 sowie auf Grund von reduzierter Batteriespannungen während des Betriebs einer Stelleinheit 4 können unterschiedliche magnetische Flüsse Φ auftreten, die bei der Verwendung lediglich einer einzigen Leiteranordnung 1 trotz gleicher Positionierung der Stelleinheit 4 zu unterschiedlichen Ergebnissen führen können. Werden von der Stelleinheit 4 oder unterschiedlichen Stelleinheiten 4 unterschiedliche magnetische Flüsse Φ abgegeben, kann bei ausschließlicher Messung des Spannungssignals U am Ausgang der Leiteranordnung 1 nicht festgestellt werden, ob eine Spannungsänderung von einer Positionsänderung der Stelleinheit 4 oder von einer Veränderung des magnetischen Flusses Φ und/oder einer Änderung der Frequenz des magnetischen Flusses Φ ausgeht.

Wird der magnetische Fluss Φ schwächer bzw. verringert sich die Frequenz des von der Stelleinheit 4 abgegebenen magnetischen Wechselflusses, verringert sich im selben Maße auch das Spannungssignal U_{R} am Ausgang der Referenzleiteranordnung 6.

Durch Division des Werts des Spannungssignals U am Ausgang der Leiteranordnung 1 durch den Wert des Spannungssignals U_{R} am Ausgang der Referenzleiteranordnung 6 kann eine dimensionslose Größe ermittelt werden, die von den Einflüssen der konkreten Beschaffenheit des magnetischen Flusses Φ frei ist.

Am Ausgang der Positionsbestimmungseinheit 5 liegt ein Signal an, das diesem Quotienten U/U_{R} entspricht. Das Signal wird an eine Übertragungseinheit 3, die der Positionsbestimmungseinheit 5 nachgeordnet ist, weitergegeben. Die Übertragungseinheit 3 ist im vorliegenden Fall, wie in Fig. 2 dargestellt, als Funksendeeinheit ausgebildet, die mit der Stelleinheit. 4 oder einem beliebigen anderen Empfänger in Funkverbindung bringbar ist. Die Übertragungseinheit 3 übermittelt dabei die ihr übermittelten Positionswerte x per Datenverbindung, insbesondere per Funkverbindung, an einen nachgeschalteten Empfänger.

Eine besonders vorteilhafte Nutzung der Erfindung ergibt sich, wie in Fig. 6 dargestellt, wenn die Übertragungseinheit 3 mit der Stelleinheit 4 in Datenverbindung steht und die Stelleinheit 4 über eine Anzeigeeinheit 8 verfügt, die die von der Übertragungseinheit 3 übermittelte Position x anzeigt. Dies hat den Vorteil, dass der Benutzer der Vorrichtung während der Eingabe ablesen kann, wie groß der von ihm durch Positionieren der Stelleinheit 4 vorgegebene Wert ist. Auf diese Weise kann beispielsweise eine falsche Platzierung der Stelleinheit 4 vermieden werden. Insbesondere kann als Stelleinheit 4 ein Mobilfunkgerät verwendet werden, das Mittel zum Aufprägen eines magnetischen Flusses Φ aufweist. Hierfür können insbesondere bei Mobilfunkgeräten bestehende Schnittstellen herangezogen werden, die vom Mobilfunkgerät üblicherweise für den Datentransfer genutzt werden, beispielsweise eine Funkverbindung über Bluetooth.

Zur Erzeugung des magnetischen Flusses Φ kann je nach der Frequenz des abzugebenden magnetischen Flusses beispielsweise eine Antenne oder ein Elektromagnet Φ herangezogen werden, es können sowohl zeitlich konstante magnetische Felder als auch magnetische Wechselfelder bzw. Wechselflüsse verwendet werden. Wird ein magnetischer Wechselfluss gewählt, kann dieser in einem sehr großen Frequenzbereich nahezu beliebig gewählt werden, wobei die Position der Stelleinheit 4 über das induzierte Spannungssignal U ermittelt werden kann. Konkret für NFC-Anwendungen werden Felder im Bereich von 13,56MHz vorgesehen. Vorteilhafterweise können Magnetfelder bis zu einigen 100MHz verwendet werden.

Weiters kann auf dem Mobilfunkgerät eine Anwendung ausgeführt werden, die sämtliche erfassten Daten sammelt und abspeichert bzw. an einen zentralen Server übermittelt.

Eine erfindungsgemäße Stelleinheit 4 ist insbesondere durch ein Mobilfunkgerät gebildet, das eine Spule zur Erzeugung eines magnetischen Flusses Φ aufweist. Dieser magnetische Fluss Φ wird zur Positionsbestimmung bei Anlage an eine erfindungsgemäße Vorrichtung verwendet. Weiters umfasst das Mobilfunkgerät eine Empfangseinheit 7 zum Aufbau einer Datenverbindung mit der Übertragungseinheit 3.

Ferner besitzt die erfindungsgemäße Stelleinheit 4 eine Anzeigeeinheit 8, auf der von der Empfangseinheit 7 empfangene Daten anzeigbar sind. Gegebenenfalls können die ermittelten Daten auch über die als Mobilfunkgerät ausgebildete Stelleinheit 4 weiter an eine zentrale Datenerfassungseinheit übertragen werden. Dabei kann eine Zuordnung des eingestellten Werts zur jeweiligen Frage und zur jeweiligen Person sowohl über das Mobilfunkgerät als auch über einen zusätzlichen von der jeweiligen Übertragungseinheit 3 übertragenen und die jeweilige Übertragungseinheit 3 identifizierenden Code erfolgen. Der Code der Übertragungseinheit wird dann, gegebenenfalls gemeinsam mit der Anschlussnummer des Mobilfunkgeräts, sowie mit der jeweils aufgenommenen Größe an die Datenerfassungseinheit, die mit dem Mobilfunkgerät in Datenverbindung steht übermittelt und dort abgelegt.

## Patentansprüche

1. Vorrichtung zur Erfassung der Position (x) einer Stelleinheit (4), umfassend
- eine Leiteranordnung (1), die sie durchsetzende magnetische Flüsse (Φ) erfasst und in ein Spannungssignal (U) umwandelt, das abhängig von der Position (x) ist, an dem der magnetische Fluss (Φ) die Leiteranordnung (1) durchdringt,
- *wobei dieses induzierte Spannungssignal (U) proportional zur Position (x) des magnetischen Flusses (Φ), gemessen entlang einer vorgegebenen Achse (X) ausgehend von einem vorgegebenen Ausgangspunkt (0), ist,*
- eine an die Leiteranordnung (1) angeschlossene Positionsbestimmungseinheit (5) vorhanden ist, die die Position (x) eines von der Stelleinheit (4) erzeugten, die Leiteranordnung (1) durchsetzenden magnetischen Flusses (Φ) ermittelt und
- der Positionsbestimmungseinheit (5) eine Übertragungseinheit (3) nachgeordnet ist, mittels der die ermittelte Position (x) an einen Empfänger übertragbar ist,
**gekennzeichnet durch** eine Stelleinheit (4), mit der bei Annäherung oder Anlage an die Leiteranordnung (1), vorzugsweise auch bei Annäherung oder Anlage an eine Referenzleiteranordnung (6), ein magnetischer Fluss (Φ), insbesondere ein magnetischer Wechselfluss (Φ), **durch** die Leiteranordnung (1), vorzugsweise auch **durch** die Referenzleiteranordnung (6), aufprägbar ist,
wobei die Stelleinheit (4) über eine Empfangseinheit (7) verfügt, die mit der Übertragungseinheit (3) in Datenverbindung, insbesondere in Funkverbindung, steht, wobei die Stelleinheit (4) über eine Anzeigeeinheit (8) verfügt, die die von der Übertragungseinheit (3) übermittelte Position (x) anzeigt.

2. Vorrichtung nach Anspruch 1, wobei
- die Referenzleiteranordnung (6) derart angeordnet ist, dass die Referenzleiteranordnung (6) im wesentlichen denselben magnetischen Fluss (Φ) erfasst wie die Leiteranordnung (1), wobei am Ausgang der Referenzleiteranordnung (6) ein Spannungssignal (U_{R}) anliegt, das unabhängig von der Position (x) der Stelleinheit (4) ist, und
- dass die Positionsbestimmungseinheit (5) das Verhältnis, insbesondere den Quotienten, des an der Leiteranordnung (1) anliegenden Spannungssignals (U) und des an der Referenzleiteranordnung (6) anliegenden Spannungssignals (U_{R}) ermittelt, abgibt und der Übertragungseinheit (3) zuführt.

3. Vorrichtung nach Anspruch 1 oder 2, wobei die Leiteranordnung (1) einen einzigen, insbesondere gewickelten oder mäanderförmigen, Leiter, insbesondere einen Draht, umfasst,
- wobei vom Leiter der Leiteranordnung (1) umschlungene Flächenbereiche, die näher dem Ausgangspunkt (0) liegen, öfter vom Draht umschlungen sind als Flächenbereiche, die vom Ausgangspunkt (0) weiter entfernt sind, und
- wobei der Leiter der Leiteranordnung (1) vorzugsweise in einer Ebene verläuft und/oder Parallel zur Achse (X) verläuft.

4. Vorrichtung nach Anspruch 2 oder 3, wobei die Referenzleiteranordnung (6) mit einem parallel zum Leiter der Leiteranordnung (1) verlaufenden Leiter gebildet ist, wobei insbesondere der vom Draht der Referenzleiteranordnung (6) umschlungene Flächenbereich mit dem vom Draht der Leiteranordnung (1) umschlungenen Flächenbereich deckungsgleich ist.

5. Vorrichtung nach einem der vorangehenden Ansprüche, wobei, die Leiteranordnung (1), gegebenenfalls auch die Referenzleiteranordnung (6), in einem flachen Trägerkörper (2), insbesondere aus Papier oder Karton, angeordnet ist bzw. sind, wobei mögliche Positionen (x) der Stelleinheit (4), beispielsweise in Form einer Skala (9), auf dem Trägerkörper (2) dargestellt, insbesondere mit einem Aufdruck versehen, sind.

6. Vorrichtung nach einem der vorangehenden Ansprüche, wobei, die Stelleinheit durch ein Mobilfunkgerät gebildet ist.

7. Vorrichtung nach einem der vorangehenden Ansprüche, wobei, die Stelleinheit (4) als separater, eigenständiger, frei beweglicher Bauteil ausgebildet ist.

8. Verfahren zur Erfassung der Position (x) einer Stelleinheit (4) gegenüber einer Leiteranordnung (1), wobei
- die Leiteranordnung (1) sie durchsetzende magnetische Flüsse (Φ) erfasst und in ein Spannungssignal (U) umwandelt, das abhängig von der Position (x) ist, an dem der magnetische Fluss (Φ) die Leiteranordnung (1) durchdringt, und
- die Stelleinheit (4) und die Leiteranordnung (1) relativ und frei gegeneinander beweglich sind,
- die Stelleinheit (4) auf einer Position (x) auf einer vorgegebenen Verschiebeachse (X) positioniert wird und währenddessen oder anschließend von der Stelleinheit (4) ein magnetischer Fluss (Φ) erzeugt wird, der die Leiteranordnung (1) durchsetzt,
- der aufgeprägte Fluss (Φ) von der Leiteranordnung (1) in ein Spannungssignal (U) umgewandelt wird, das am Ausgang der Leiteranordnung (1) anliegt, und
- dieses Spannungssignal (U) am Ausgang der Leiteranordnung (1) gemessen wird und das Spannungssignal (U) als der Position (x) entsprechender Wert ausgewertet oder zur Übertragung auf Abfrage zur Verfügung gehalten wird, **dadurch gekennzeichnet, dass** die ermittelte Position (x) an die Stelleinheit (4) übertragen und auf der Stelleinheit (4) angezeigt wird.

9. Verfahren nach Anspruch 8, wobei
- das am Ausgang einer Referenzleiteranordnung (6), die im wesentlichen denselben magnetischen Fluss erfasst wie die Leiteranordnung (1), anliegende induzierte Spannungssignal (U_{R}) ermittelt wird und
- das Verhältnis, insbesondere der Quotient, des an der Leiteranordnung (1) anliegenden Spannungssignals (U) und des an der Referenzleiteranordnung anliegenden Spannungssignals (U_{R}) ermittelt bzw. zur Auswertung und/oder Übertragung zur Verfügung gehalten wird.

10. Verfahren gemäß einem der Ansprüche 8 oder 9, wobei gemeinsam mit der Position (x) der Stelleinheit (4) gegenüber der Leiteranordnung (1) ein Code übermittelt wird, der der Leiteranordnung (1) eindeutig zugeordnet ist und diese eindeutig bezeichnet.

11. Verfahren gemäß Anspruch 10, wobei die als Mobilfunkgerät ausgebildete Stelleinheit (4) mit einer Datenerfassungseinheit, insbesondere über ein Mobilfunknetz, in Funkverbindung steht und an diese die Anschlussnummer, den Code sowie die Position übermittelt.

## Claims

1. A device for the detection of the position (x) of an actuator (4), comprising a conductor arrangement (1), which detects magnetic fluxes (Φ) flowing therethrough and converts the same into a voltage signal (U) that is dependent on the position (x), at which the magnetic flux (Φ) penetrates the conductor arrangement (1),
- *wherein said induced voltage signal (U) is proportional to the position (x) of the magnetic flux (Φ), measured along a predetermined axis (X) starting from a predetermined starting point (O),*
- a position-determining unit (5) connected to the conductor arrangement (1) exists, which determines the position (x) of a magnetic flux (Φ) generated by the actuator (4) passing through the conductor arrangement (1) and
- a transmission unit (3), by means of which the determined position (x) can be transmitted to a receiver, is arranged downstream of the position-determining unit (5), **characterized by** an actuator (4), with which upon approach to or contact with the conductor arrangement (1), preferably also upon approach to or contact with a reference conductor arrangement (6), a magnetic flux (Φ), in particular an alternating magnetic flux (Φ), can be impressed by the conductor arrangement (1), preferably also by the reference conductor arrangement (6),
wherein the actuator (4) has a receiver unit (7), which is in data connection, in particular in radio connection, to the transmission unit (3), wherein the actuator (4) has a display devise (8), which displays the position (x) transmitted by the transmission unit (3).

2. A device according to claim 1, wherein
- the reference conductor arrangement (6) is arranged in such a way that the reference conductor arrangement (6) detects essentially the same magnetic flux (Φ) as the conductor arrangement (1), wherein a voltage signal (U_{R}) is applied to the output of the reference conductor arrangement (6), which is independent of the position (x) of the actuator (4), and
- that the position-determining unit (5) determines, emits and feeds the proportion, in particular the ratios of the voltage signal (U) applied to the conductor arrangement (1) and of the voltage signal (U_{R}) applied to the reference conductor arrangement (6), to the transmission unit (3).

3. A device according to claim 1 or 2, wherein the conductor arrangement (1) comprises a single, in particular wound or meander-shaped conductor, in particular a wire,
- wherein surface areas surrounded by the conductor of the conductor arrangement (1), which are closer to the starting point (0), are more frequently surrounded by the wire than surface areas, which are further away from the starting point (0), and
- wherein the conductor of the conductor arrangement (1) runs preferably in a plane and/or runs parallel to the axis (X).

4. A device according to claim 2 or 3, wherein the reference conductor arrangement (6) is formed with a conductor running parallel to the conductor of the conductor arrangement (1), wherein in particular the surface area surrounded by the wire of the reference conductor arrangement (6) is coextensive with the surface area surrounded by the wire of the conductor arrangement (1).

5. A device according to one of the preceding claims, wherein the conductor arrangement (1), if applicable, also the reference conductor arrangement (6), is or are arranged in a flat support body (2), in particular made from paper or cardboard, wherein possible positions (x) of the actuator (4) are, for example, in the form of a scale (9), depicted on the support body (2), provided in particular with an imprint.

6. A device according to one of the preceding claims, wherein the actuator is formed by a mobile radio device.

7. A device according to one of the preceding claims, wherein the actuator (4) is designed as a separate, independent, freely movable component.

8. A method for the detection of the position (x) of an actuator (4) in relation to a conductor arrangement (1), wherein
- the conductor arrangement (1) detects the magnetic fluxes (Φ) flowing therethrough and converts the same into a voltage signal (U) that is dependent on the position (x), at which the magnetic flux (Φ) penetrates the conductor arrangement (1), and
- the actuator (4) and the conductor arrangement (1) are relatively and freely movable against each other,
- the actuator (4) is positioned in a position (x) on a predetermined displacement axis (X) and at the same time or subsequently a magnetic flux (Φ) is generated by the actuator (4), which passes through the conductor arrangement (1),
- the impressed flux (Φ) is converted by the conductor arrangement (1) into a voltage signal (U), which is applied to the output of the conductor arrangement (1), and
- said voltage signal (U) is measured at the output of the conductor arrangement (1) and the voltage signal (U) is evaluated as the position (x) of the corresponding value or is kept available for transfer for detection, **characterized in that** the determined position (x) is transferred to the actuator (4) and is displayed on the actuator (4).

9. A method according to claim 8, wherein
- the induced voltage signal (U_{R}) applied to the output of a reference conductor arrangement (6), which detects essentially the same magnetic flux as the conductor arrangement (1), is determined and
- the proportion, in particular the ratio of the voltage signal (U) applied to the conductor arrangement (1) and of the voltage signal (U_{R}) applied to the reference conductor arrangement is determined or is kept available for evaluation and/or transfer.

10. A method according to one of claims 8 or 9, wherein a code is transmitted together with the position (x) of the actuator (4) in relation to the conductor arrangement (1), which is clearly allocated to the conductor arrangement (1) and clearly designates the latter.

11. A method according to claim 10, wherein the actuator (4) designed as a mobile radio device is in radio connection with a data acquisition unit, in particular, via a mobile radio network, and transmits the connection number, the code as well as the position to the latter.

## Revendications

1. Dispositif permettant de détecter la position (x) d'une unité de réglage (4), comportant
- un système de conducteur (1) qui détecte les flux magnétiques (Φ) le traversant et les transforme en un signal de tension (U) qui est fonction de la position (x) à laquelle le flux magnétique (Φ) traverse le système de conducteur (1),
- *ce signal de tension (U) induit étant proportionnel à la position (x) du flux magnétique (φ), mesuré le long d'un axe (X) défini en partant d'un point de départ (0) prédéfini,*
- une unité de détermination de la position (5), raccordée au système de conducteur (1), est présente, elle détermine la position (x) d'un flux magnétique (φ) généré par l'unité de réglage (4) et traversant le système de conducteur (1), et
- une unité de transmission (3), qui permet de transmettre à un récepteur la position (x) déterminée, est montée en aval de l'unité de détermination de la position (5),
**caractérisé par** une unité de réglage (4), par laquelle, en cas d'approche ou d'appui contre le système de conducteur (1), de préférence aussi en cas d'approche ou d'appui contre un système de conducteur de référence (6), un flux magnétique (φ), en particulier un flux magnétique alternatif (φ), peut être appliqué par le système de conducteur (1), de préférence aussi par le système de conducteur de référence (6),
ladite unité de réglage (4) disposant d'une unité de réception (7), qui est reliée par une liaison de transmission de données, en particulier par une liaison radio, à l'unité de transmission (3), ladite unité de réglage (4) disposant d'une unité d'affichage (8) qui affiche la position (x) transmise par l'unité de transmission (3).

2. Dispositif selon la revendication 1, dans lequel
- le système de conducteur de référence (6) est disposé de telle sorte que le système de conducteur de référence (6) détecte sensiblement le même flux magnétique (φ) que le système de conducteur (1), un signal de tension (U_{F}), indépendant de la position (x) de l'unité de réglage (4), étant appliqué à la sortie du système de conducteur de référence (6), et
- l'unité de détermination de la position (5) détermine le rapport, en particulier le quotient, entre le signal de tension (U) appliqué au système de conducteur (1) et le signal de tension (U_{F}) appliqué au système de conducteur de référence (6), délivre ledit rapport et l'achemine vers l'unité de transmission (3).

3. Dispositif selon la revendication 1 ou 2, dans lequel le système de conducteur (1) comporte un seul conducteur, en particulier enroulé ou en forme de méandres, en particulier un fil,
- des zones de surface entourées par le conducteur du système de conducteur (1), lesquelles sont situées plus près du point de départ (0), sont plus souvent entourées par le fil que les zones de surface plus éloignées du point de départ (0), et
- le conducteur du système de conducteur (1) s'étendant de préférence dans un plan et/ou s'étendant parallèlement à l'axe (X).

4. Dispositif selon la revendication 2 ou 3, dans lequel le système de conducteur de référence (6) est formé avec un conducteur parallèle au conducteur du système de conducteur (1), notamment la zone de surface entourée par le fil du système de conducteur de référence (6) coïncide avec la zone de surface entourée par le fil du système de conducteur (1).

5. Dispositif selon l'une quelconque des revendications précédentes, dans lequel le système de conducteur (1), le cas échéant aussi le système de conducteur de référence (6), est ou sont disposé(s) dans un corps de support (2) plat, en particulier en papier ou en carton, des positions (x) possibles de l'unité de réglage (4) étant représentées, par exemple, sous la forme d'une graduation (9), sur le corps de support (2), en particulier munies d'une impression.

6. Dispositif selon l'une quelconque des revendications précédentes, dans lequel l'unité de réglage est formée par un poste de radiocommunication mobile.

7. Dispositif selon l'une quelconque des revendications précédentes, dans lequel l'unité de réglage (4) est réalisée sous la forme d'un composant séparé, indépendant, librement mobile.

8. Procédé permettant de détecter la position (x) d'une unité de réglage (4) par rapport à un système de conducteur (1), dans lequel
- le système de conducteur (1) détecte les flux magnétiques (φ) le traversant et les transforme en un signal de tension (U) qui est fonction de la position (x) à laquelle le flux magnétique (φ) traverse le système de conducteur (1), et
- l'unité de réglage (4) et le système de conducteur (1) sont mobiles librement et l'un par rapport à l'autre,
- l'unité de réglage (4) est positionnée en une position (x) sur un axe de déplacement (X) prédéfini, et pendant ce temps ou ensuite, l'unité de réglage (4) génère un flux magnétique (φ) qui traverse le système de conducteur (1),
- le flux magnétique (φ) appliqué est transformé par le système de conducteur (1) en un signal de tension (U) qui est appliqué à la sortie du système de conducteur (1), et
- ce signal de tension (U) est mesuré à la sortie du système de conducteur (1) et ledit signal de tension (U) est analysé comme la valeur correspondant à la position (x) ou est laissé à disposition en vue d'une transmission sur demande, **caractérisé en ce que** la position (x) déterminée est transmise à l'unité de réglage (4) et est affichée sur l'unité de réglage (4).

9. Procédé selon la revendication 8, dans lequel
- le signal de tension (U_{R}) induit, appliqué à la sortie d'un système de conducteur de référence (6), qui détecte sensiblement le même flux magnétique que le système de conducteur (1), est déterminé, et
- le rapport, en particulier le quotient, entre le signal de tension (U) appliqué au système de conducteur (1) et le signal de tension (U_{R}) appliqué au système de conducteur de référence, est déterminé ou est mis à disposition en vue d'une analyse et/ou d'une transmission.

10. Procédé selon la revendication 8 ou 9, dans lequel un code, qui est associé sans équivoque au système de conducteur (1) et qui désigne celui-ci sans équivoque, est transmis conjointement à la position (x) de l'unité de réglage (4) par rapport au système de conducteur (1).

11. Procédé selon la revendication 10, dans lequel l'unité de réglage (4), réalisée sous la forme d'un poste de radiocommunication mobile, est reliée par radio à une unité de détection de données et transmet à cette dernière le numéro de raccordement, le code, ainsi que la position.
